# EUROPEAN PATENT APPLICATION

(11) **EP 2 312 737 A1**
(43) Date of publication of application: **20.04.2011**
(21) Application number: 09172910.3
(22) Date of filing: 13.10.2009
(51) Int. Cl.: H02M 7/04, H02J 7/00

(54) **Power supply device with battery adapter**

(71) Applicant: Chen, Chen-San, Taipei City (TW)
(72) Inventor: Chen, Chen-San, Taipei City (TW)
(74) Representative: Lang, Christian

(57) **Abstract**

A power supply device includes at least one virtual battery connector installed at an end of the electric output line, an anode and a cathode, such that the power adapter can convert an AC power into a DC power, and transmit the DC power to an anode and a cathode of the virtual battery connector through the electric output line. If the virtual battery connector is installed into a battery compartment of an electric appliance, the virtual battery connector will be able to substitute a battery generally available in the market for supplying the DC power to the electric appliance. The way of using the virtual battery connector as a power supply interface of the electric appliance not just reduces the battery consumption substantially, but also achieves the environmental protection effect.

## Description

### BACKGROUND OF THE INVENTION

### 1. Field of Invention

The present invention relates to a power supply device, and more particularly to a power supply device that substitutes a general battery available in the market and installed in a battery compartment of an electric appliances for supplying battery power.

### 2. Description of Related Art

Battery is a device for providing a portable energy source, and thus many electric appliances come with a design that supports the use of a battery and facilitates the use of electric appliances having an installed battery, regardless of indoor or outdoor applications. Obviously, batteries are used extensively in a convenient manner.

In general, the batteries available in the market are consuming products and will be disposed after the battery power is exhausted. If used batteries are disposed and buried with living garbage, mercury and heavy metal substances of the used batteries will be permeated into soil to contaminate underground water and finally enter into the body of fishes and agricultural products and threaten human health indirectly. Among five major substances threatening our environment, battery includes three of them, respectively: mercury, lead and cadmium, and battery electrolytes will flow out from used batteries eventually. Due to an extremely high consumption of batteries in our daily life, the environment is affected severely. Thus, finding a way of reducing battery consumption to achieve the environmental protection effect demands immediate attentions and feasible solutions.

### SUMMARY OF THE INVENTION

In view of the foregoing shortcomings of the prior art, the inventor of the present invention based on years of experience in the related industry to conduct extensive researches and experiments, and finally developed a power supply device of the present invention,

Therefore, it is a primary objective of the present invention to provide a power supply device capable of substituting a general battery available in the market and installed in a battery compartment of an electric appliance for supplying battery power, so as to reduce the consumption of batteries available in the market and achieve the environmental protection effect.

To achieve the foregoing objective, the present invention provides a power supply device having a power adapter, and the power adapter comprises at least one virtual battery connector installed at an end of an electric output line of the power adapter, and the virtual battery connector includes an anode and a cathode, wherein the power adapter converts an alternate current (AC) power into a direct current (DC) power first, and then transmits the DC power to the anode and cathode of the virtual battery connector through the electric output line. If the virtual battery connector is installed into a battery compartment of an electric appliance, the virtual battery connector will substitute a battery available in the market for supplying the DC power to the electric appliance.

### BRIEF DESCRIPTION OF THE DRAWINGS

The invention, as well as its many advantages, may be further understood by the following detailed description and drawings in which:
FIG. 1a is a schematic view of a power supply device and its virtual battery connector in accordance with the present invention;
FIG. 1b is a schematic view of a model of the virtual battery connector as depicted in FIG. 1a;
FIG. 1c is a schematic view of another model of the virtual battery connector as depicted in FIG. 1a;
FIG. 2a is a schematic view of a first way of using a power supply device in accordance with the present invention;
FIG. 2b is a schematic view of a second way of using a power supply device in accordance with the present invention;
FIG. 3 is a schematic view of another variation of the virtual battery connector as depicted in FIG. 1a; and
FIG. 4 is a schematic view of male and female connectors of a virtual battery connector as depicted in FIG. 1a.

### DETAILED DESCRIPTION OF THE INVENTION

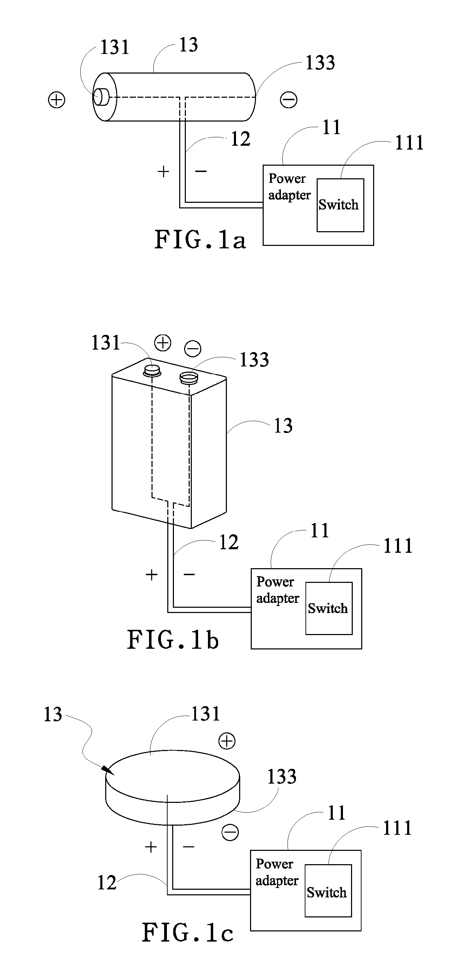

With reference to FIG. 1a, the present invention provides a power supply device comprising a power adapter 11, an electric output line 12 connected to an output terminal of the power adapter 11, and at least one virtual battery connector 13 installed at an end of the electric output line 12, wherein the virtual battery connector 13 includes an anode 131 and a cathode 133, and the anode 131 is electrically coupled to an anode terminal of the electric output line 12, and the cathode 133 is electrically coupled to a cathode terminal of the electric output line 12, and the power adapter 11 converts an AC power inputted from an input terminal of into a DC power, and transmits the DC power to the anode and cathode 131, 133 of the virtual battery connector 13 through the electric output line 12.

The power adapter 11 can be switched selectively to a desired voltage output (such as 1.5V, 3V, 4.5V of DC power) by a switch 111.

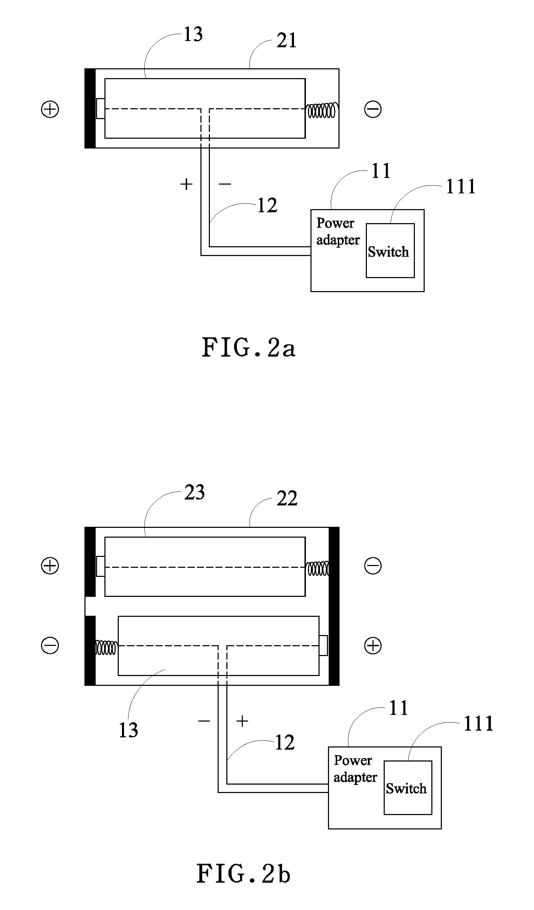

With reference to FIGS. 1a, 1b and 1c for different models of virtual battery connectors 13, the virtual battery connector can be a connector for a Size D battery (or No. 1 battery), a Size C battery (or No. 2 battery), a Size AA battery (or No. 3 battery), or a Size AAA battery (or No. 4 battery) as shown in FIG. 1a, a square battery as shown in FIG. 1b, and a button battery as shown in FIG. 1c, such that the virtual battery connector 13 can be installed in a compatible battery compartment 21 of an electric appliance (as shown in FIG. 2a).

With reference to FIG. 2a, the present invention installs the virtual battery connector 13 into a battery compartment 21 of an electric appliance (such as a clock, a water heater, and a table lamp, etc), and the virtual battery connector 13 can substitute a general battery available in the market for supplying the DC power to the electric appliance, such that the virtual battery connector 13 can be used as an interface for supplying power to the electric appliance. The invention not just reduces the battery consumption only, but also achieves the environmental protection effect.

With reference to FIG. 2b, the present invention can be used together with a short-circuit battery 23, and the short-circuit battery 23 is a virtual battery whose anode and cathode are connected to form a short circuit (or electric connection) of the anode and the cathode of the virtual battery, such that when the virtual battery connector 13 is connected in series or in parallel with a battery compartment 22 of an electric appliance, the short-circuit battery 23 is installed in the battery compartment 22, so that the virtual battery connector 13 is connected in series or in parallel with the short-circuit battery 23 for supplying the DC power to the electric appliance.

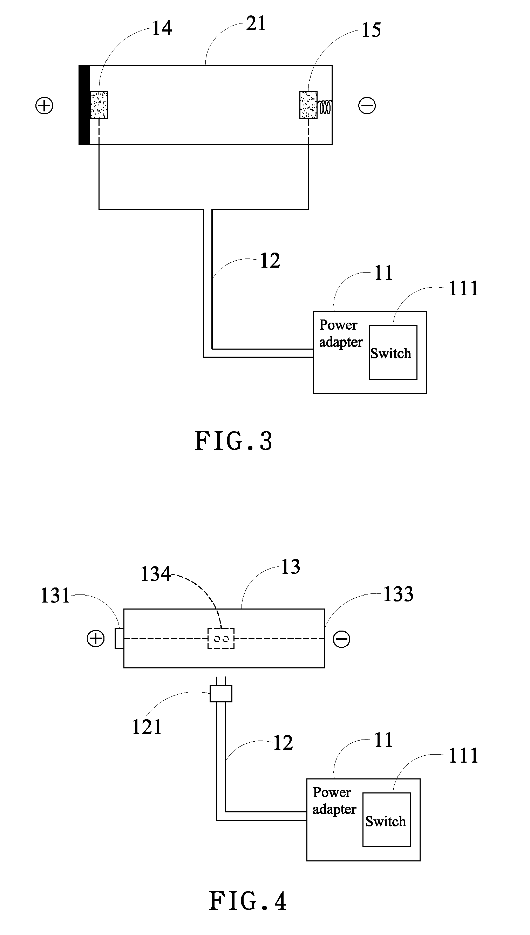

With reference to FIG. 3 for another variation of the virtual battery connector 13, the virtual battery connector 13 includes a first magnetic element 14 (such as a super magnet) and a second magnetic element 15 (such as a super magnet), wherein the first magnetic element 14 is electrically coupled to an anode terminal of the electric output line 12, and the second magnetic element 15 is electrically coupled to a cathode terminal of the electric output line 12, such that the first magnetic element 14 is attached onto the anode terminal of the battery compartment 21, and the second magnetic element 15 is attached onto the cathode terminal of the battery compartment 21 for supplying the DC power to the electric appliance.

With reference to FIG. 4, various models of the virtual battery connectors 13 include a connector for a Size D battery (or No. 1 battery) as shown in FIG. 1a, a Size C battery (or No. 2 battery), a Size AA battery (or No. 3 battery), a Size AAA battery (No. 4 battery), a square battery and a button battery, a female connector 134 installed to the virtual battery connector 13, and a male connector 121 installed at an end of the electric output line 12 for electrically connecting the anode and the cathode 131, 133 of the virtual battery connector.

Many changes and modifications in the above described embodiment of the invention can, of course, be carried out without departing from the scope thereof. Accordingly, to promote the progress in science and the useful arts, the invention is disclosed and is intended to be limited only by the scope of the appended claims.

## Claims

1. A power supply device, comprising:
a power adapter, having an input terminal and an output terminal, such that after an alternate current (AC) power inputted from the input terminal is converted into a direct current (DC) power, the DC power is outputted from an electric output line connected to the output terminal;
at least one virtual battery connector, installed at an end of the electric output line, and having an anode and a cathode, and the anode being electrically coupled to an anode terminal of the electric output line, and the cathode being electrically coupled to a cathode terminal of the electric output line, and disposed in a battery compartment of a compatible electric appliance for supplying the DC power.

2. The power supply device of claim 1, wherein the virtual battery connector is a connector of a battery selected from the collection a Size D battery (or No. 1 battery), a Size C battery (or No. 2 battery), a Size AA battery (or No. 3 battery), a Size AAA battery (No. 4 battery), a square battery and a button battery.

3. The power supply device of claim 1, wherein the virtual battery connector is applied to a battery compartment connected in series or in parallel with an electric appliance, and connected in series or in parallel with a short-circuit battery that is connected to an anode and a cathode, for supplying the DC power to the electric appliance.

4. The power supply device of claim 1, wherein the virtual battery connector includes a first magnetic element and a second magnetic element, and the first magnetic element is electrically coupled to an anode terminal of the electric output line, and the second magnetic element is electrically coupled to a cathode terminal of the electric output line.

5. The power supply device of claim 1, wherein the power adapter is switched selectively to a desired voltage output by a switch.

6. The power supply device of claim 1, wherein the virtual battery connector disposed at an end of the electric output line further comprises a female connector installed to the virtual battery connector and a male connector installed at an end of the electric output line for electrically connecting the anode and the cathode of the virtual battery connector.
